# EUROPEAN PATENT SPECIFICATION

(11) **EP 3 900 901 B1**
(45) Date of publication and mention of the grant of the patent: **01.05.2024**
(21) Application number: 21169083.9
(22) Date of filing: 19.04.2021
(51) Int. Cl.: B27C 3/02, B23Q 39/02, B27C 3/04, B27C 5/06, B27C 9/02, B27C 9/04, B27M 1/08

(54) **DOUBLE-FACED MACHINE FOR INDUSTRIAL PROCESSING**
DOPPELSEITIGE MASCHINE ZUR INDUSTRIELLEN VERARBEITUNG
MACHINE DOUBLE FACE POUR TRAITEMENT INDUSTRIEL

(30) Priority: 20.04.2020 IT 202000008404
(43) Date of publication of application: 27.10.2021
(73) Proprietor: C.M.S. S.p.A., 24019 Zogno (BG) (IT)
(72) Inventor: BALESTRINI, Antonio, 22063 Cantù (CO) (IT)
(74) Representative: Biallo, Dario

(56) References cited:
- EP-A1- 1 712 337
- EP-A1- 2 894 018
- EP-A1- 3 511 123
- EP-A2- 1 405 693
- WO-A1-03/097296

## Description

The present invention refers to a double-faced machine for industrial processing, for example a machine for processing workpieces in wood or other materials, such as for example a tenoning, end cutting, drilling or mortising machine or a machine that allows the combination of two or more of the aforementioned, or other, functions.

As is known, there are various machines for the industrial processing of elements or workpieces of different materials which allow to give them desired shapes and with the aim of forming them and then using them for specific purposes.

An example of such machines are tenoning machines, which are used for processing workpieces of wood, in particular for making tenons that represent male coupling elements, used for producing furnishing elements such as chairs, doors and windows.

These machines make allow to profile one end of the inserted wooden elements in order to create the desired tenon.

The tenons are then inserted into female coupling elements, so-called mortise.

Another type of coupling between different elements is the one by means of pins which, however, require butted and perforated ends where it is possible to insert the pins which are then useful for coupling with other parts machined in the same way.

The tenoning, end cutting and drilling or mortising operations take place by means of special tools that rotate and move on the workpiece to be processed at a high speed, to obtain the described interlocks.

Such machines for industrial processing of workpieces or elements normally comprise a supporting structure which develops in length along a longitudinal direction and which is at least partially closed so as to define an internal space of the machine in which the components and in particular one or more machining heads equipped with tools for machining the workpieces are housed. In general terms, the machines also comprise one or more working stations in which the workpiece is processed, sometimes one or more parking stations in which the tool is parked when not in use. In particular, the working and parking stations are arranged side by side along the longitudinal direction of the machine and are generally alternated with each other on a first front facade of the machine parallel to the longitudinal direction. The machines also have movement and guiding means which move and guide the machining head so that the latter, by translating, reaches the aforesaid stations.

The working stations generally comprise platforms where to position the workpieces to be machined; these platforms are arranged at access points or openings made on the front facade of the supporting structure to allow access from the outside to the inside of the machine. In this way the operator can place the workpieces to be machined on the platform so that they protrude towards the inside of the machine thus allowing the machining by the tool.

These working stations therefore allow positioning the workpiece to be machined with the end to be processed inserted inside the machine.

Generally, suitable gripping elements or pressing elements are also provided at the front facade, suitable for holding the workpieces in position during their machining.

However, the configuration of the pressing elements and the platforms allows the processing of one workpiece only on its ends, while it is often necessary to process the same workpiece also on its other sides, i.e. also at the lateral surfaces.

For example, in case the joints of workpieces intended to make up a chair or a table are to be made, in addition to end cutting, drilling or mortising or tenoning their ends, it is also necessary to carry out machinings on the flanks and more generally on all surfaces.

A possible solution to this drawback consists in inserting the workpieces in new machines arranged for machining on these further surfaces.

This solution implies high costs because it is necessary to prepare at least two machines.

Alternatively, the same machine is reconfigured from time to time to perform the various processing. This is the case described in the Italian patent having the number 0001395502 (application number 102009901732383). The drawback of this solution resides in the fact that reconfiguration is a complex operation that requires time and the intervention of qualified personnel to carry it out. This leads to a lowering of productivity and an increase in production costs. Another prior art document EP3511123A1 discloses the preamble of claim 1.

The object of the present invention is to obviate the aforementioned drawbacks and in particular to devise a machine for industrial processing capable of machining the head and sides of a workpiece without requiring reconfiguration.

This and other objects according to the present invention are achieved by making a double-faced machine for industrial processing as set forth in claim 1.

Further characteristics of the double-faced machine for industrial processing are the subject matter of the dependent claims.

The features and advantages of a double-faced machine for industrial processing according to the present invention will be more apparent from the following illustrative and non-limiting description, with reference to the appended schematic drawings, wherein:
- Figure 1 is a front perspective view of a double-faced machine for industrial processing according to the present invention;

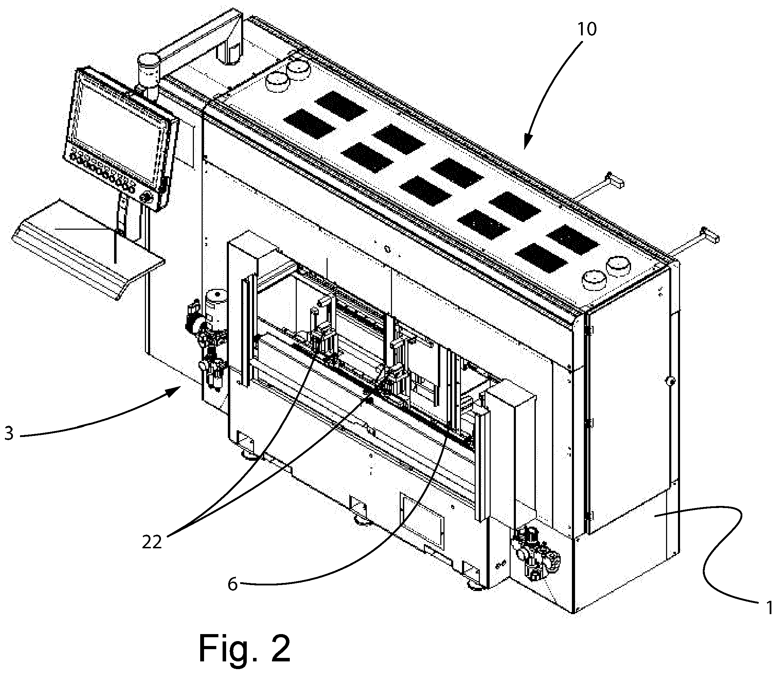

- Figure 2 is a rear perspective view of the machine of Figure 1;
- Figure 3 is a perspective view of a first embodiment of the machine of Figure 1 without its casing;
- Figure 4 is a perspective view of a second embodiment of the machine of Figure 1 without its casing;
- Figures 5A and 5B are perspective views of a first embodiment of a machining head of a double-faced machine for industrial processing according to the present invention;
- Figure 5C is a view of the machining head of Figures 5A and 5B;
- Figures 6A and 6B are perspective views of a second embodiment of a machining head of a double-faced machine for industrial processing according to the present invention;
- Figure 6C is a side view of the machining head of Figures 6A and 6B.

With reference to the figures, a double-faced machine for industrial processing is shown, indicated as a whole with 10.

In the following description, particular reference will be made to a tenoning machine 10, however this does not exclude that the double-faced machine for industrial processing may be a different type of machine, such as for example an end cutting, drilling or mortising machine or a machine that groups several functions.

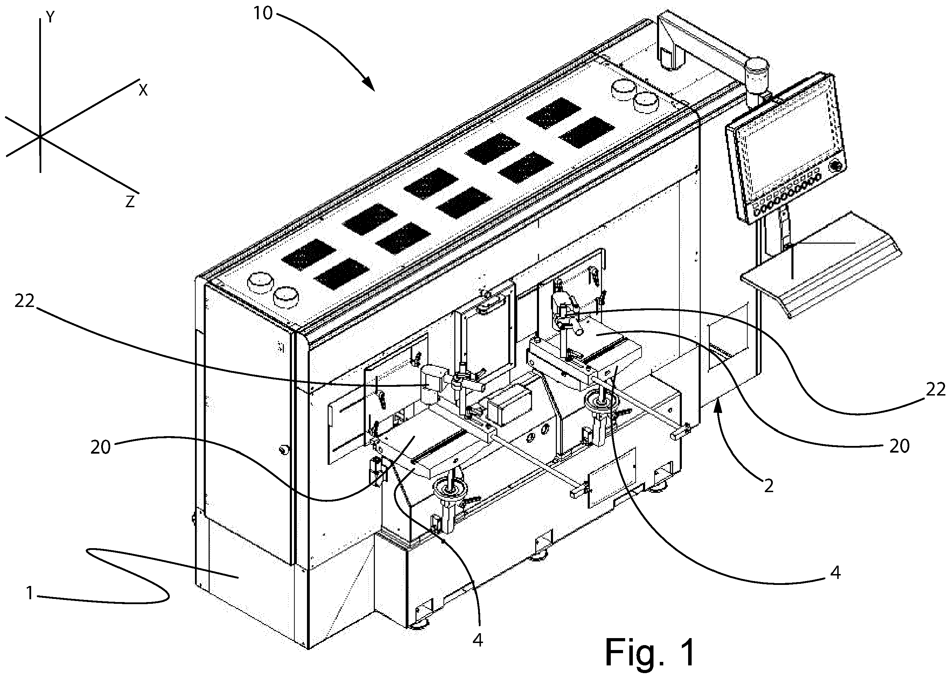

For simplification purposes, the Cartesian plane is defined, visible in Figure 1, in which the axis x is the length development axis of the machine 10, the axis y is the height development axis of the machine 10 and the axis z is the depth development axis of the machine 10.

As is visible in Figure 1, the machine 10 comprises a supporting structure 1 which develops in length along a longitudinal direction X adapted to support the functional components of the machine 10; this supporting structure 1 is at least partially closed so as to define a space inside the machine 10 so as to cover the components and prevent operators from accessing the various moving and non-moving parts.

The machine 10 comprises in particular a front facade 2 and a rear facade 3.

Furthermore, the machine 10 comprises at least one front working station 4 associated with the supporting structure 1 on the front facade 2 of the machine 10 and at least one rear working station 6 associated with the supporting structure 1 on the rear facade 3 of the machine 10, in which the at least one front working station 4 and the at least one rear working station 6 are arranged to allow machining on the different ends or surfaces of the same workpiece.

The machine 10 further comprises at least one machining head 11 associated with at least one spindle 7, 16 in turn associated with at least one tool 5, 5A 15, 15A.

The tools 5, 5A, 15, 15A can be replaced according to the particular machining to be carried out.

The at least one machining head 11 is housed in the internal space and mobile at least along the longitudinal direction X so that it can reach the at least one front working station 4 and the at least one rear working station 6.

For example, the at least one front working station 4 is arranged to allow machining at the longitudinal ends of a workpiece being machined, and the at least one rear working station 6 is arranged to allow machining on lateral surfaces of the workpiece being machined.

In this case, as shown in the figures, the at least one front working station 4 comprises first gripping elements 22 adapted to hold the workpiece being machined in such a way as to place one of the ends in working position. In the embodiment shown in Figure 1, the front facade of the machine 10 comprises two front working stations 4, each of them comprising a platform 20 on which the workpiece is placed, and gripping elements 22 corresponding to pressing elements adapted to hold it in position on the platforms 20.

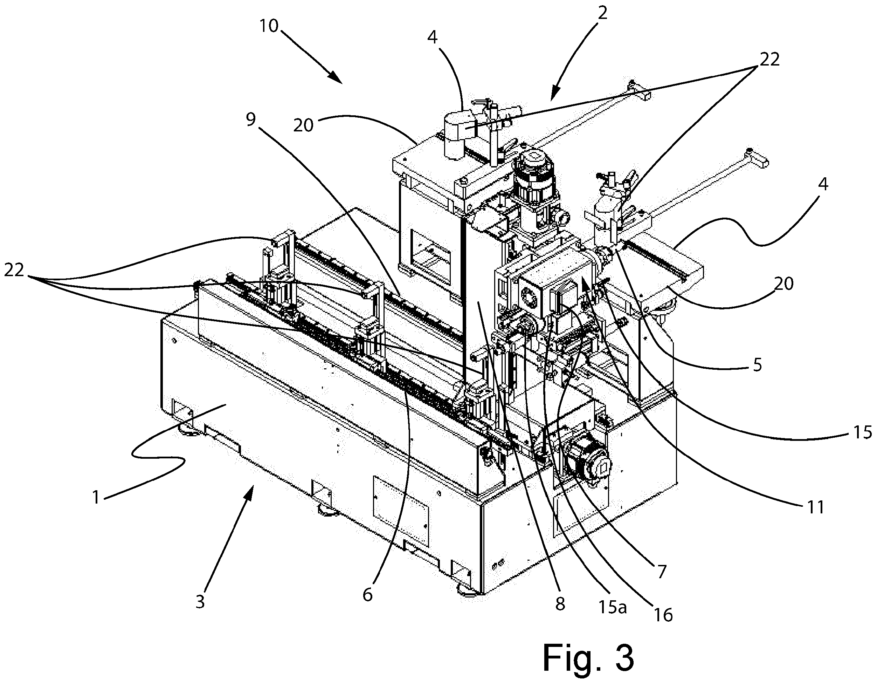

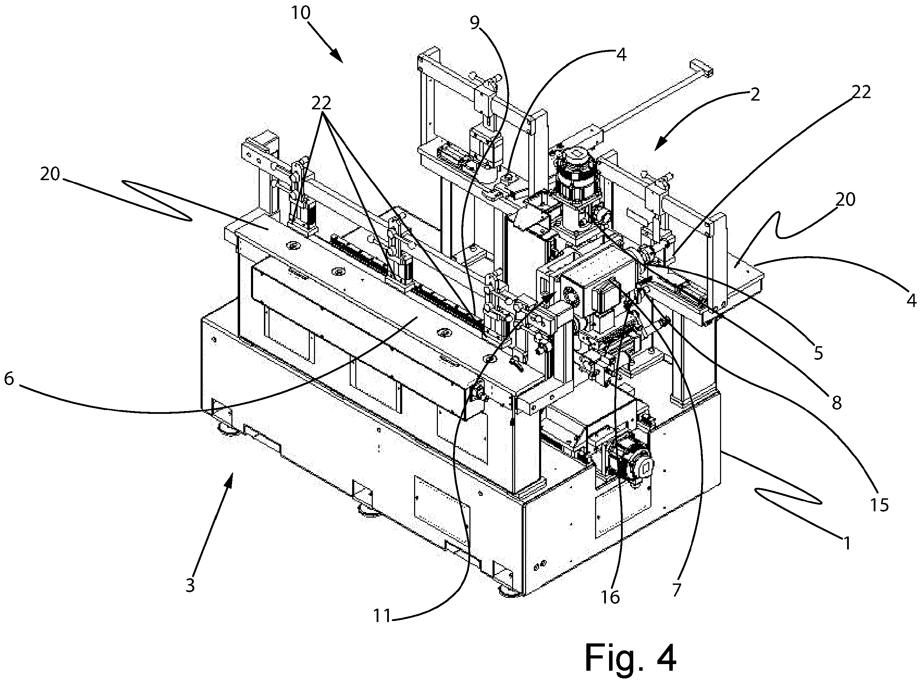

The rear facade 3 is visible according to two of its embodiments in Figures 3 and 4.

In a first embodiment shown in Figure 3, the rear facade 3 comprises a rear working station 6 comprising gripping elements 22, in the form of grippers adapted to hold the workpiece being machined in such a way as to place one of the lateral surfaces in working position.

In the further embodiment of Figure 4, the rear facade 3 comprises a rear working station 6 comprising gripping elements 22, in the form of pressers, which by working in combination with a platform 20, which extends along the entire length of the rear working station 6, hold the workpiece being machined stationary in such a way as to place one of the lateral surfaces in working position.

The machining head 11 is in particular mounted on an upright 8 mobile at least along the longitudinal direction x of development of the machine 10 on a guide 9, which allows to the machining head 11, hence to the at least one spindle 7, 16 and to the respective tools 5, 5A, 15 and 15A to move along the longitudinal direction x.

The at least one spindle 7, 16 can be further mobile on the upright along the vertical direction y, but also and particularly in depth along the direction z, so that the respective tools 5, 5A, 15 and 15A are allowed to have the mobility required to carry out the machining on both the front 4 and the rear 6 working stations.

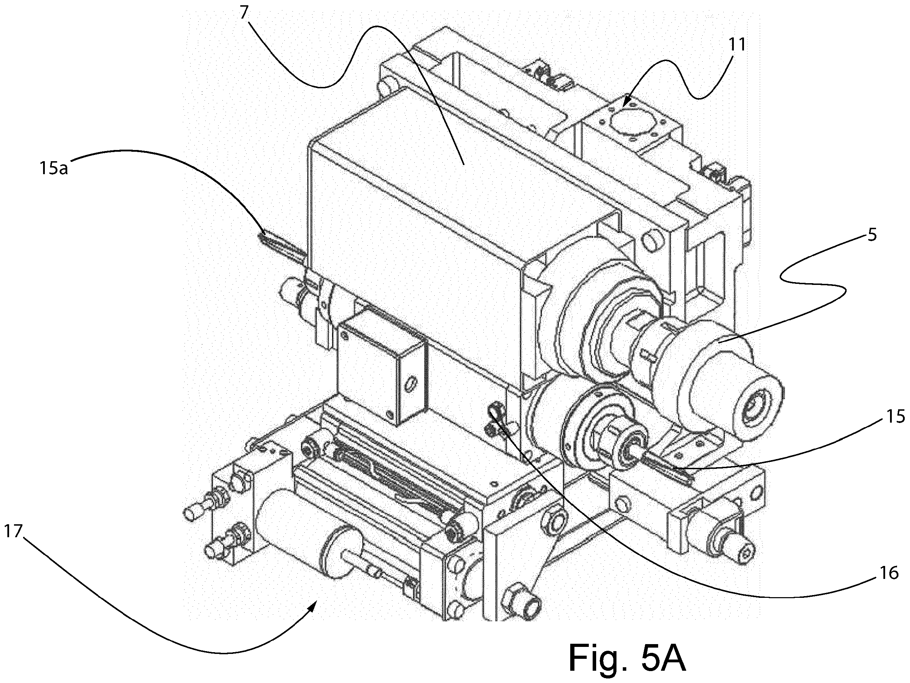

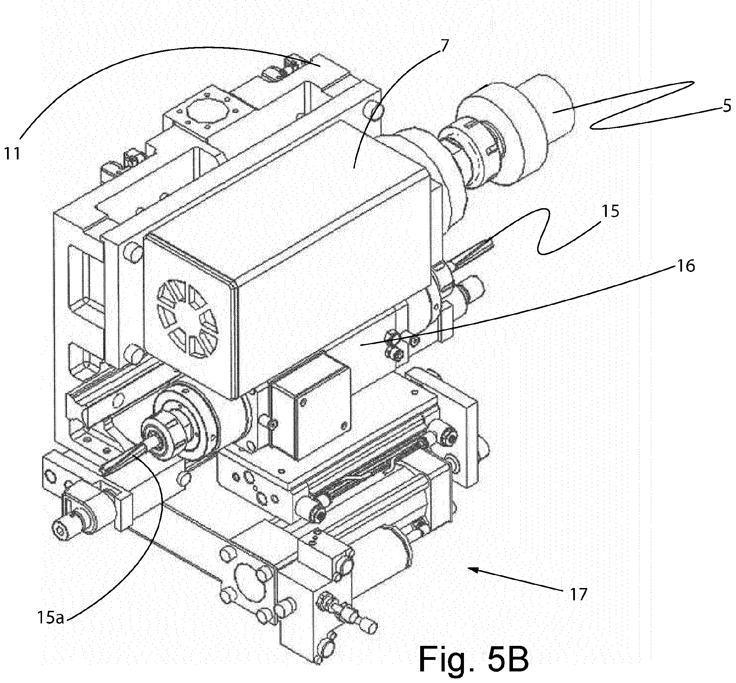

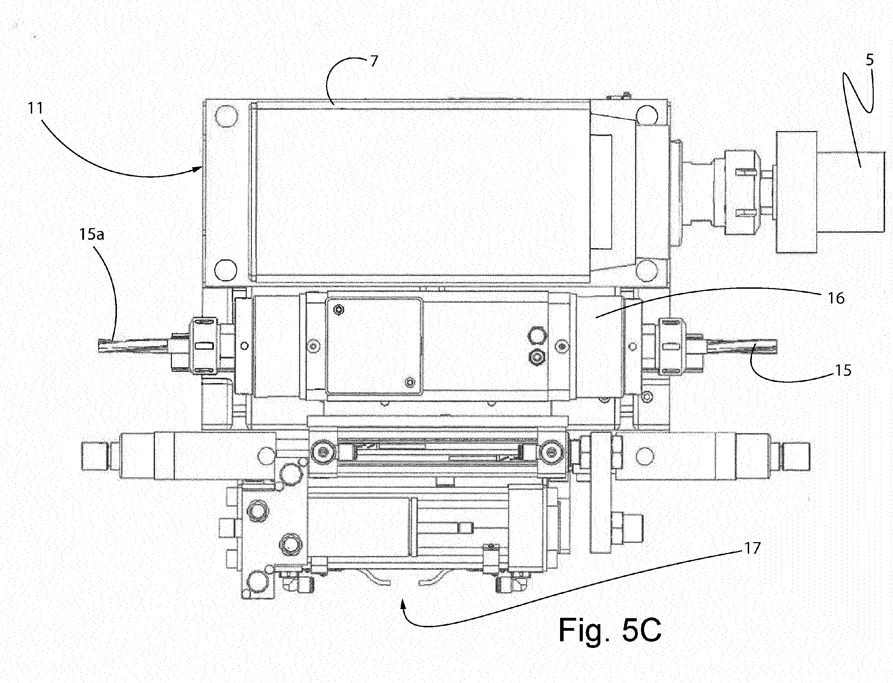

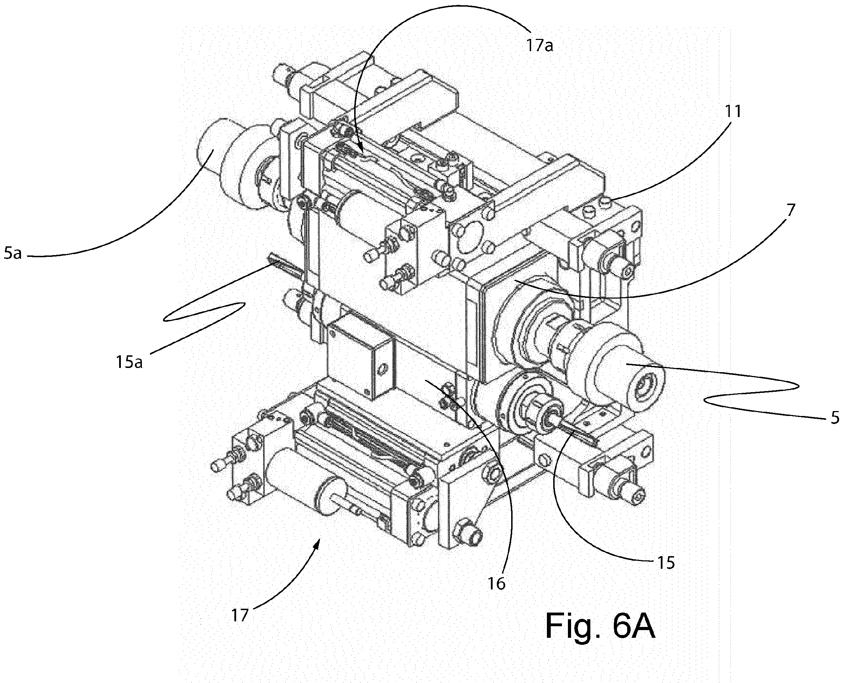

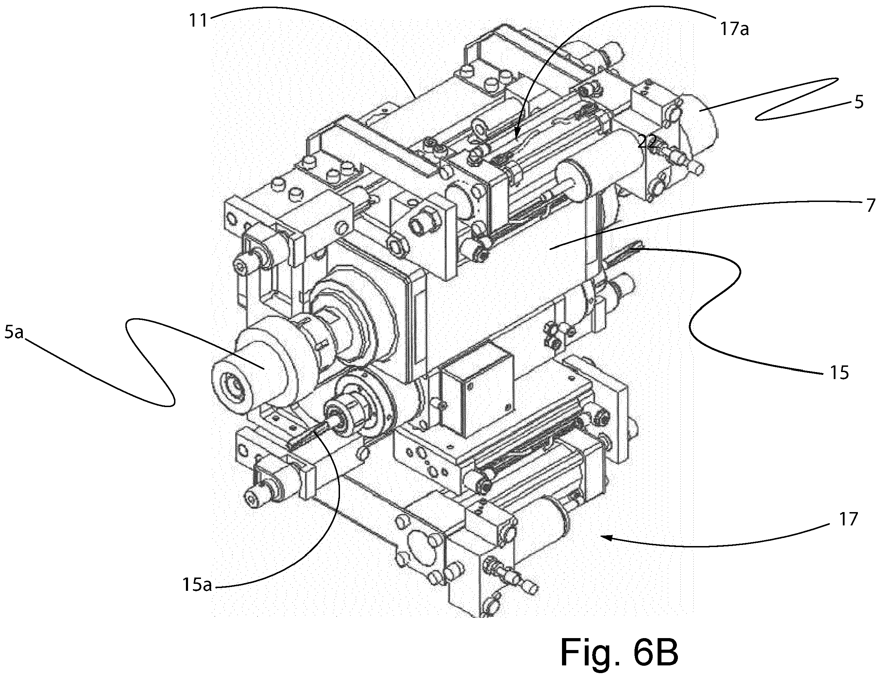

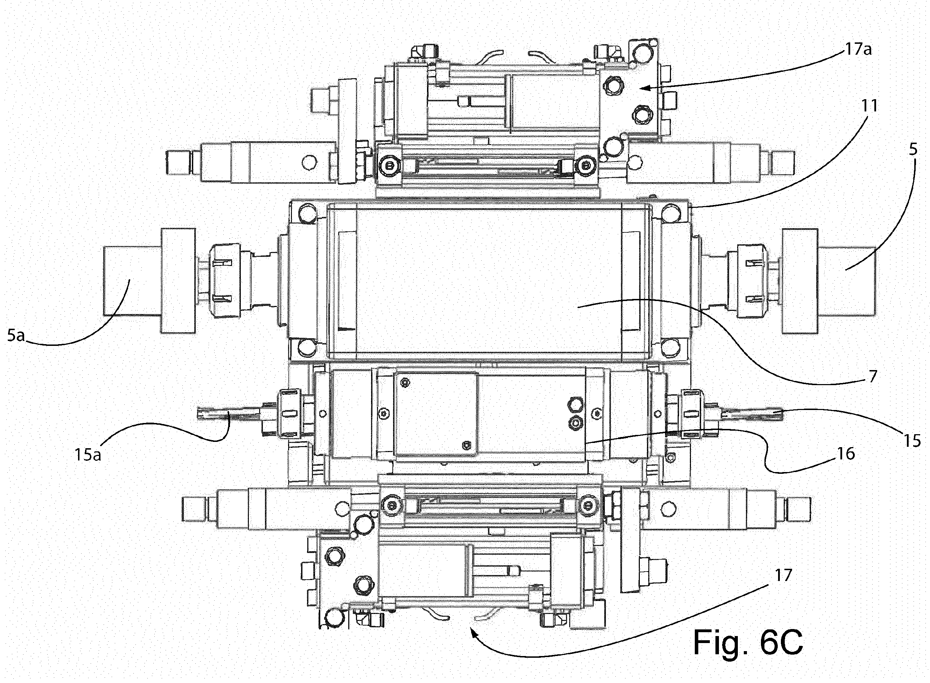

This mobility of the at least one spindle 7, 16 can be conveyed by a set of oleopneumatic cylinders 17, 17A shown in Figures 5A, 5B, 5C, 6A, 6B and 6C or by other commands known as NC axes.

In a first embodiment not shown, the machine 10 comprises a single machining head 11 associated with a single spindle 7, 16 in turn associable with at least one tool 5, 5A, 15 and 15A adapted to carry out the machining of a workpiece both when it is placed on the at least one front working station 4 and when it is placed on the at least one rear working station 6.

In this case, the machining head 11 can rotate on itself around a vertical or horizontal axis so as to position the tool 5, 5A, 15 and 15A on the desired working station. Alternatively, the spindle 7, 16 is associable with a first tool 5, 15 adapted to carry out the machining of a workpiece on the front working station 4 and with a second tool 5A, 15A adapted to carry out the machining of a workpiece on the rear working station 6.

In a second embodiment, shown in the attached Figures 5A-5C, the machining head 11 comprises a first spindle 7 and a second spindle 16. The first spindle 7 is associable with a single tool 5 adapted to carry out the machining of a workpiece when it is placed on the at least one front working station 4, while the second spindle 16 is associable with a first tool 15 adapted to carry out the machining of a workpiece when it is placed on the at least one front working station 4 and with a second tool 15A adapted to carry out the machining of a workpiece when it is placed on the rear working station 6.

In a third embodiment of the machining head 11, shown in Figures 6A-6C, it is associable with two spindles 7, 16 both associated with two respective tools 5, 5A, 15 and 15A.

In this third embodiment, unlike the second embodiment, also the first spindle 7 is associable with a first tool 5 adapted to carry out the machining of a workpiece on the at least one front working station 4 and with a second tool 5A adapted to carry out the machining of a workpiece on the at least one rear working station 6. In practice, the spindles 7 and 16 have two opposite engagement seats for the tools 5, 5A, 15 and 15A.

In this case, according to the need, one of the two spindles 7 and 16 or both will move the tool 5 or 15 associated with the front facade 2 of the machine 10 for machining a workpiece on the front working station 4 or the tool 5A or 15A associated with the rear facade 3 of the machine 10 for machining a workpiece on the rear working station 6.

In a fourth embodiment not shown, the machining head 11 comprises a first spindle 7 associable with a first tool 5 adapted to carry out the machining of a workpiece on the at least one front station 4 and a second spindle 16 associable with a second tool 15A adapted to carry out the machining of a workpiece on the at least one rear station 6.

In this case, both spindles 7 and 16 can be associated with a single upright 8, thus process on either one or the other portion of the machine 10.

In a fifth embodiment not shown, the machine 10 comprises two uprights 8 each mobile on a respective guide 9, therefore two machining heads 11. In this case, each of them is associated with at least one spindle 7, 16, wherein a first spindle 7 is at least adapted to carry out the machining of a workpiece on said at least one front working station 4 by means of a tool 5 and a second spindle 16 is at least adapted to carry out the machining of a workpiece on said at least one rear working station 6 by means of a tool 15A.

Both spindles 7, 16 can independently carry out the machining of a workpiece associated with the respective working station.

The operation of the double-faced machine for industrial processing 10 is as follows, with reference to the embodiment of the machine 10 comprising the machining head 11 shown in Figures 5A-5C, it being understood that a similar description applies to a double-faced machine 10 according to the other embodiments.

When it is necessary to machine a workpiece in a longitudinal end portion thereof, it is inserted into the at least one front working station 4 thanks to the appropriate pressers gripping elements 22 and to the platform 20. In this case the workpieces are inserted so as to be transversal to the longitudinal direction of the machine 10.

At this point the first spindle 7 is activated which in turn activates the tool 5 and guides it during the machining of the aforementioned end portion of a workpiece. The machining takes place in particular thanks to the mobility of the spindle 7 on the upright 8 along at least the two directions X, Y of the Cartesian plane.

Once the tenoning or end cutting machining carried out by the first spindle 7 by means of the tool 5 has been completed, the second spindle 16 can be called into operation which in addition to the movements in X and Y also has the movement in Z carried out by the set of cylinders 17 for the execution of holes or mortises on the same end of the workpiece, by means of the tool 15. Once the machining of the end portion of one or more workpieces has been completed, according to the need, it is continued with the machining of their lateral portion, thus with the machining on the rear working station 6.

For example, through the front working station 4 tenons are made on the end portion of the workpieces while the rear working station 6 serves to finish the lateral faces thereof.

The workpieces are then inserted along their lateral portion, therefore substantially so as to be parallel to the longitudinal direction x of the machine 10 on the rear working station 6, in particular thanks to the gripper-like gripping elements 22 or thanks to the combination of pressers gripping elements 22 and to the platform 20.

At this point, the second spindle 16 activates the second tool 15A facing the at least one rear working station 6 so as to be able to machine on the lateral portion of the inserted workpiece.

In the event that the first spindle 7 is also associable with a second tool 5A and is endowed with the possibility of moving along Z for example by means of the set of cylinders 17A, it will also be able to bring this second tool 5A at the rear working station 6.

Advantageously, when the double-faced machine 10 comprises one of the two spindles 7 which has two tool holder ends, there is also the possibility of carrying out the machining of the end of a workpiece and the machining of the lateral part of another workpiece.

From the above description the features of the machine of the present invention, as well as the advantages thereof, are evident.

Finally, it is clear that the device thus conceived is susceptible to many modifications and variants, all falling within the same inventive concept; furthermore, all details can be replaced by equivalent technical elements. In practice, the materials used, as well as the dimensions thereof, can be of any type according to the technical requirements.

## Claims

1. Double-faced machine (10) for industrial processing comprising:
- a supporting structure (1) which develops in length along a longitudinal direction X, said supporting structure (1) being at least partially closed so as to define an internal space and comprising a front facade (2) and a rear facade (3);
- at least one front working station (4) associated with said supporting structure (1) on said front facade (2) of said machine (10);
- at least one rear working station (6) associated with said supporting structure (1) on said rear facade (3) of said machine (10), said at least one front working station (4) and said at least one rear working station (6) being arranged to allow machining on different surfaces of a same workpiece;
- at least one machining head (11) associated with at least one spindle (7, 16) in turn associated with at least one tool (5, 5A, 15, 15A), said at least one machining head (11) being mounted on an upright (8) mobile at least along the longitudinal direction X of development of the machine (10) on a guide (9) allowing to the machining head (11), hence to the at least one spindle (7,16) and to the respective tools (5,5A, 15, 15A) to move along the longitudinal direction X, said at least one spindle (7,16) being further mobile on the upright (8) along the vertical direction Y, and along the direction Z, **characterized by** that said at least one machining head (11) being housed in said internal space and mobile at least along the longitudinal direction X so that it can reach said at least one front working station (4) and said at least one rear working station (6), the respective tools (5, 5A, 15 and 15A) being allowed to have the mobility required to carry out the machining on both the front (4) and the rear (6) working stations, said at least one front working station (4) being arranged to allow machining on longitudinal end surfaces of a workpiece, and said at least one rear working station (6) being arranged to allow machining on lateral surfaces of said workpiece.

2. Double-faced machine (10) according to claim 1 wherein said at least one front working station (4) comprises first gripping elements (22) adapted to hold said workpiece in such a way as to place one of said longitudinal ends surfaces in working position, and said at least one rear working station (6) comprises second gripping elements (22) adapted to hold said workpiece in such a way as to place one of said lateral surfaces in working position.

3. Double-faced machine (10) according to claim 1 or 2 wherein said spindle (16) is associable with a first tool (15) adapted to carry out the machining of a workpiece on said at least one front working station (4) and with a second tool (15A) adapted to carry out the machining of a workpiece on said at least one rear working station (6).

4. Double-faced machine (10) according to claim 1 or 2 wherein said spindle (7) is associable with a first tool (5) adapted to carry out the machining of a workpiece on said at least one front working station (4) and on said at least one rear working station (6), said machining head (11) being rotatable on itself around a vertical or horizontal axis.

5. Double-faced machine (10) according to one of claims 1 or 2 **characterized in that** said at least one machining head (11) comprises a first spindle (7) associable with at least a first tool (5) adapted to carry out the machining of a workpiece on said at least one front working station (4) and a second spindle (16) associable with at least a second tool (15A) adapted to carry out the machining of a workpiece on said at least one rear working station (6).

6. Double-faced machine (10) according to claim 5 wherein said first spindle (7) can be associated with two tools (5, 5A) and / or said second spindle (16) can be associated with two tools (15, 15A).

7. Double-faced machine (10) according to one of the preceding claims **characterized in that** it comprises two machining heads (11).

## Patentansprüche

1. Doppelseitige Maschine (10) zur industriellen Verarbeitung, umfassend:
- eine Tragstruktur (1), die sich entlang einer Längsrichtung X in die Länge entwickelt, wobei die Tragstruktur (1) zumindest teilweise geschlossen ist, um einen Innenraum zu definieren, und eine vordere Fassade (2) und eine hintere Fassade (3) umfasst;
- mindestens eine vordere Arbeitsstation (4), die mit der Tragstruktur (1) an der vorderen Fassade (2) der Maschine (10) assoziiert ist;
- mindestens eine hintere Arbeitsstation (6), die mit der Tragstruktur (1) an der hinteren Fassade (3) der Maschine (10) assoziiert ist, wobei die mindestens eine vordere Arbeitsstation (4) und die mindestens eine hintere Arbeitsstation (6) so angeordnet sind, dass sie die Bearbeitung an verschiedenen Oberflächen eines gleichen Werkstücks ermöglichen;
- mindestens einen Bearbeitungskopf (11), der mit mindestens einer Spindel (7, 16) assoziiert ist, die wiederum mit mindestens einem Werkzeug (5, 5A, 15, 15A) assoziiert ist, wobei der mindestens eine Bearbeitungskopf (11) an einem Ständer (8) montiert ist, der mindestens entlang der Längsrichtung X der Entwicklung der Maschine (10) auf einer Führung (9) beweglich ist, die es dem Bearbeitungskopf (11), also der mindestens einen Spindel (7, 16) und den jeweiligen Werkzeugen (5, 5A, 15, 15A) ermöglicht, sich entlang der Längsrichtung X zu bewegen, wobei die mindestens eine Spindel (7, 16) weiter entlang der vertikalen Richtung Y und entlang der Richtung Z an dem Ständer (8) beweglich ist, **dadurch gekennzeichnet, dass** der mindestens eine Bearbeitungskopf (11) in dem Innenraum untergebracht ist und mindestens entlang der Längsrichtung X beweglich ist, so dass er die mindestens eine vordere Arbeitsstation (4) und mindestens eine hintere Arbeitsstation (6) erreichen kann,
wobei die jeweiligen Werkzeuge (5, 5A, 15 und 15A) die Beweglichkeit haben können, die erforderlich ist, um die Bearbeitung sowohl an der vorderen (4) als auch an der hinteren (6) Arbeitsstation durchzuführen, wobei die mindestens eine vordere Arbeitsstation (4) so angeordnet ist, dass sie die Bearbeitung an Längsendoberflächen eines Werkstücks ermöglicht, und die mindestens eine hintere Arbeitsstation (6) so angeordnet ist, dass sie die Bearbeitung an Seitenoberflächen des Werkstücks ermöglicht.

2. Doppelseitige Maschine (10) nach Anspruch 1, wobei die mindestens eine vordere Arbeitsstation (4) erste Greifelemente (22) umfasst, die dazu ausgelegt sind, das Werkstück so zu halten, dass eine der Längsendoberflächen in die Arbeitsposition platziert wird, und die mindestens eine hintere Arbeitsstation (6) zweite Greifelemente (22) umfasst, die dazu ausgelegt sind, das Werkstück so zu halten, dass eine der Seitenoberflächen in die Arbeitsposition platziert wird.

3. Doppelseitige Maschine (10) nach Anspruch 1 oder 2, wobei die Spindel (16) mit einem ersten Werkzeug (15), das dazu ausgelegt ist, die Bearbeitung eines Werkstücks an der mindestens einen vorderen Arbeitsstation (4) durchzuführen, und mit einem zweiten Werkzeug (15A), das dazu ausgelegt ist, die Bearbeitung eines Werkstücks an der mindestens einen hinteren Arbeitsstation (6) durchzuführen, assoziierbar ist.

4. Doppelseitige Maschine (10) nach Anspruch 1 oder 2, wobei die Spindel (7) mit einem ersten Werkzeug (5) assoziierbar ist, das dazu ausgelegt ist, die Bearbeitung eines Werkstücks an der mindestens einen vorderen Arbeitsstation (4) und an der mindestens einen hinteren Arbeitsstation (6) durchzuführen, wobei der Bearbeitungskopf (11) um sich selbst um eine vertikale oder horizontale Achse drehbar ist.

5. Doppelseitige Maschine (10) nach einem der Ansprüche 1 oder 2, **dadurch gekennzeichnet, dass** der mindestens eine Bearbeitungskopf (11) eine erste Spindel (7), die mindestens mit einem ersten Werkzeug (5) assoziierbar ist, das dazu ausgelegt ist, die Bearbeitung eines Werkstücks an der mindestens einen vorderen Arbeitsstation (4) durchzuführen, und eine zweite Spindel (16), die mit mindestens einem zweiten Werkzeug (15A) assoziierbar ist, das dazu ausgelegt ist, die Bearbeitung eines Werkstücks an der mindestens einen hinteren Arbeitsstation (6) durchzuführen, umfasst.

6. Doppelseitige Maschine (10) nach Anspruch 5, wobei die erste Spindel (7) mit zwei Werkzeugen (5, 5A) assoziiert werden kann und/ oder die zweite Spindel (16) mit zwei Werkzeugen (15, 15A) assoziiert werden kann.

7. Doppelseitige Maschine (10) nach einem der vorhergehenden Ansprüche, **dadurch gekennzeichnet, dass** sie zwei Bearbeitungsköpfe (11) umfasst.

## Revendications

1. Machine double face (10) pour traitement industriel comprenant:
- une structure de support (1) qui se développe en longueur le long d'une direction longitudinale X, ladite structure de support (1) étant au moins partiellement fermée de manière à définir un espace intérieur et comprenant une façade avant (2) et une façade arrière (3);
- au moins un poste de travail avant (4) associé à ladite structure de support (1) sur ladite façade avant (2) de ladite machine (10);
- au moins un poste de travail arrière (6) associé à ladite structure de support (1) sur ladite façade arrière (3) de ladite machine (10), ledit au moins un poste de travail avant (4) et ledit au moins un poste de travail arrière (6) étant disposés pour permettre l'usinage sur des surfaces différentes d'une même pièce;
- au moins une tête d'usinage (11) associée à au moins une broche (7, 16) à son tour associée à au moins un outil (5, 5A, 15, 15A), ladite au moins une tête d'usinage (11) étant montée sur un montant (8) mobile au moins le long de la direction longitudinale X de développement de la machine (10) sur un guide (9) permettant à la tête d'usinage (11), donc à l'au moins une broche (7, 16) et aux outils respectifs (5, 5A, 15, 15A) de se déplacer le long de la direction longitudinale X, ladite au moins une broche (7, 16) étant en outre mobile sur le montant (8) le long de la direction verticale Y, et le long de la direction Z, **caractérisée par le fait que** ladite au moins une tête d'usinage (11) étant logée dans ledit espace intérieur et mobile au moins le long de la direction longitudinale X de manière à pouvoir atteindre lesdits au moins un poste de travail avant (4) et au moins un poste de travail arrière (6),
les outils respectifs (5, 5A, 15 et 15A) étant autorisés à avoir la mobilité nécessaire pour effectuer l'usinage sur les postes de travail avant (4) et arrière (6), ledit au moins un poste de travail avant (4) étant disposé pour permettre l'usinage sur les surfaces d'extrémité longitudinales d'une pièce, et ledit au moins un poste de travail arrière (6) étant disposé pour permettre l'usinage sur les surfaces latérales de ladite pièce.

2. Machine double face (10) selon la revendication 1 dans laquelle ledit au moins un poste de travail avant (4) comprend des premiers éléments de préhension (22) adaptés pour saisir ladite pièce de manière à placer l'une desdites surfaces d'extrémités longitudinales en position de travail, et ledit au moins un poste de travail arrière (6) comprend des seconds éléments de préhension (22) adaptés pour saisir ladite pièce de manière à placer l'une desdites surfaces latérales en position de travail.

3. Machine double face (10) selon la revendication 1 ou 2 dans laquelle ladite broche (16) est associable à un premier outil (15) adapté pour réaliser l'usinage d'une pièce sur ledit au moins un poste de travail avant (4) et à un second outil (15A) adapté pour réaliser l'usinage d'une pièce sur ledit au moins un poste de travail arrière (6).

4. Machine double face (10) selon la revendication 1 ou 2 dans laquelle ladite broche (7) est associable à un premier outil (5) adapté pour réaliser l'usinage d'une pièce sur ledit au moins un poste de travail avant (4) et sur ledit au moins un poste de travail arrière (6), ladite tête d'usinage (11) étant rotative sur elle-même autour d'un axe vertical ou horizontal.

5. Machine double face (10) selon l'une des revendications 1 ou 2 **caractérisée en ce que** ladite au moins une tête d'usinage (11) comprend une première broche (7) associable à au moins un premier outil (5) adapté pour réaliser l'usinage d'une pièce sur ledit au moins un poste de travail avant (4) et une seconde broche (16) associable à au moins un second outil (15A) adapté pour réaliser l'usinage d'une pièce sur ledit au moins un poste de travail arrière (6).

6. Machine double face (10) selon la revendication 5 dans laquelle ladite première broche (7) peut être associée à deux outils (5, 5A) et/ou ladite seconde broche (16) peut être associée à deux outils (15, 15A).

7. Machine double face (10) selon l'une des revendications précédentes **caractérisée en ce qu'**elle comprend deux têtes d'usinage (11).
